# EUROPÄISCHE PATENTSCHRIFT

(11) **EP 1 753 637 B1**
(45) Veröffentlichungstag und Bekanntmachung des Hinweises auf die Patenterteilung: **17.03.2010**
(21) Anmeldenummer: 05752834.1
(22) Anmeldetag: 07.06.2005
(51) Int. Cl.: B60L 11/18, B60K 6/28

(54) **ENERGIEMANAGEMENTSYSTEM EINER TRANSPORTEINRICHTUNG**
ENERGY MANAGEMENT SYSTEM OF A TRANSPORT DEVICE
SYSTEME DE GESTION D'ENERGIE D'UN DISPOSITIF DE TRANSPORT

(30) Priorität: 11.06.2004 DE 102004028353
(43) Veröffentlichungstag der Anmeldung: 21.02.2007
(73) Patentinhaber: SIEMENS AKTIENGESELLSCHAFT, 80333 München (DE)
(72) Erfinder: FISCHER, Gerhard, 91056 Erlangen (DE); HOLLAND, Maarten, 91099 Poxdorf (DE)
(86) Internationale Anmeldenummer: PCT/EP2005/052619
(87) Internationale Veröffentlichungsnummer: WO 2005/120883

(56) Entgegenhaltungen:
- EP-A- 0 811 757
- EP-A- 1 256 476
- DE-A1- 10 005 581
- US-B1- 6 314 347

## Beschreibung

Die Erfindung betrifft ein Verfahren zum Betrieb einer Transporteinrichtung und eine Transporteinrichtung. Transporteinrichtungen zum Transport von Gütern und/oder Personen sind beispielsweise als Lastkraftwagen, Personenkraftwagen, Transportfahrzeug und/oder Hebeeinrichtung für z.B. ISO-Container oder dergleichen (z.B. Hebeeinrichtung in einer Hafenanlage oder in einem Containerbahnhof) oder auch als führerlose Transportfahrzeuge, insbesondere für Containerhäfen bekannt.

Transporteinrichtungen sind insbesondere kraftstoffelektrische Fahrzeuge und/oder kraftstoffelektrische Hebeeinrichtungen, in welchen als Energiequelle eine Verbrennungsmaschine zur Gewinnung von elektrischem Strom mittels eines Generators dient. Die Verbrennungsmaschine ist zur Verbrennung von Kraftstoff vorgesehen, welche von der Transporteinrichtung in einem Kraftstofftank mitführbar ist. Kraftstoffe sind beispielsweise Benzin, Diesel, Erdgas, Wasserstoff, usw. Vorteilhafterweise ist die Verbrennungsmaschine ein Dieselmotor, welcher mechanisch an einen elektrischen Generator zur Erzeugung elektrischen Stroms gekoppelt ist. Die mittels des elektrischen Generators erzeugte elektrische Energie ist für einen elektrischen Energieverbraucher nutzbar. Der elektrische Energieverbraucher ist insbesondere ein elektrischer Antrieb. Der elektrische Antrieb dient beispielsweise zur Fortbewegung der Transporteinrichtung und/oder dem Heben und/oder Senken von Lasten einer Hebeeinrichtung, wobei die Hebeeinrichtung beispielsweise auch eine Transporteinrichtung ist.

Ist die Transporteinrichtung beispielsweise ein kraftstoffelektrisches Fahrzeug wie z.B. ein Straddle Carrier - SC - bzw. ein Rubber Tired Gantry Crane - RTG - (gummibereifter Stapelkran) oder ein Automated Guided Vehicle - AGV- (automatisch gelenkte Fahrzeuge) so dienen diese Systeme insbesondere dem Güterumschlag. Sie dienen dabei insbesondere dem Heben und Senken, sowie dem Transport von Lasten. Lasten sind beispielsweise Güter, Container, Personen, usw. Für das Heben der Last wird Energie benötigt, für das Senken wird Energie freigesetzt. Je größer die Last, desto größer ist die Energie.

Häufig dient dabei als primäre Energiequelle ein Kraftstoff der in einem Verbrennungsmotor wie z.B. einem Dieselmotor verbrannt wird. Ein an dem Dieselmotor oder einer anderen Maschine gekoppelter Generator wie z.B. ein Synchrongenerator oder auch eine Brennstoffzelle, bei welcher kein Generator benötigt wird, dienen der Speisung eines elektrischen Stromkreises. Der elektrische Stromkreis ist beispielsweise als Zwischenkreis ausgebildet. An dem elektrischen Stromkreis sind z.B. elektrische Motoren für ein Fahrwerk und/oder ein Hubwerk der Transporteinrichtung angekoppelt. Die Ankopplung erfolgt vorteilhafter Weise mittels eines Stromrichters. Als Energiespeicher der Transporteinrichtung dienen beispielsweise eine Batterie, ein Schwungrad und/oder eine Kondensatoreinheit (beispielsweise mit Ultrakondensatoren).

Ein für den Verbrauch von Energie in der Transporteinrichtung vorgesehener Speicher, wie z.B. ein elektrischer Energiespeicher, ein chemischer Energiespeicher, und/oder ein Kraftstoffspeicher/Tank ist in seinem Speichervolumen begrenzt. Ist der Energiespeicher leer, so ist dieser nachzufüllen. Um eine Einsatzbereitschaft der Transporteinrichtung zu gewährleisten ist es bekannt, dass bei Unterschreitung eines bestimmten Mindestspeicherwertes an gespeicherter Energie eine Aufforderung zum Auffüllen des bzw. der Speicher erfolgt. Ist beispielsweise der Energiespeicher für den Kraftstoff unterhalb einer bestimmten Schwelle, so wird dies angezeigt und ein Tankvorgang angefordert. Nachteilig dabei ist, dass dieser Tankvorgang beispielsweise zu einem Zeitpunkt zu erfolgen hat, in dem eine Transportaufgabe, -maßnahme der Transporteinrichtung zu unterbrechen ist.

Um möglichst viele Transportaufgaben, bzw. diesen gleichgestellte Transportmaßnahmen erbringen zu können ist ein effizientes Energiemanagement notwendig. Aus der DE 200 01 113 U1 ist beispielsweise eine Antriebsvorrichtung für ein kraftstoffelektrisch angetriebenes Fahrzeug bekannt. In kraftstoffelektrisch angetriebenen Fahrzeugen wird deren elektrisches Bordnetz zumeist über einen Synchrongenerator gespeist. Zur Energieeinsparung ist ein System vorsehbar, welches es ermöglicht, in energiesparenden Arbeitspunkten zu betreiben. Dies führt dazu, dass beispielsweise der Dieselmotor vorzugsweise in einem Betriebspunkt betrieben wird, bei welchem möglichst wenig Diesel verbraucht wird. Durch eine Drehzahlregelung des Dieselaggregates ist also eine Optimierung des Betriebes erreichbar. Überschüssige Energie ist in einem Energiezwischenspeicher (z.B. eine Batterie, ein Schwungrad, ein Kondensator) speicherbar und dort für Energieverbraucher abrufbar. Nachteilig dabei ist, dass der Dieselmotor bzw. der Generator als Energiequelle stets derart in ihrer Leistung auszulegen sind, dass diese die maximal mögliche benötigte Leistung abdecken. Dies ist beispielsweise nachteilig für gummibereifte Hafenumschlaggeräte, welche hauptsächlich mit wechselnder Last betrieben werden. Diese Geräte sind immer für die maximal zu erwartenden Last ausgelegt und somit weit überdimensioniert. Dies trifft auch für das dieselelektrische Aggregat zu.

Auch aus der DE 198 26 551 ist beispielsweise bereits ein universell einsetzbares Steuerungssystem für ein aus mindestens einem Energiespeicher und einer Energiequelle bestehendes Hybridsystem bekannt. Auch hier besteht das Problem der notwendigen Überdimensionierung der Anlage.

Die EP 1 256 476 A2 betrifft ein Energiemanagementsystem für ein hybridelektrisches Fahrzeug. Dabei wird aufgrund der Daten eines Navigationssystems, einer digitalen Kartendatenbank und gegebenenfalls von Eingaben des Fahrers die Fahrtstrecke des Fahrzeugs analysiert und eine Vorhersage für die Leistungsanforderungen erstellt. Aufgrund dieser wird im Rahmen des Energiemanagements die Energieverteilung und der Energieverbrauch gesteuert.

Das US-Patent 6,314,347 B1 offenbart eine Anlage und ein Verfahren zur Fahrtkontrolle eines Hybridfahrzeugs. Dabei wird die Fahrtstrecke in eine Vielzahl von Segmenten zerlegt, für die zur Optimierung des Energieverbrauchs eine Ansteuerung der energiebezogenen Komponenten des Fahrzeugs vorgenommen wird. Dabei wird von den Daten eines Navigationssystems ausgegangen, es wird jedoch auch auf Daten aus der Vergangenheit zurückgegriffen.

In der DE 100 05 581 A1 ist ein weiteres Verfahren zum Steuern eines Hybridfahrzeugs beschrieben. Dieses ist mit einem regenerativen System ausgerüstet. Durch das Verfahren soll die durch das regenerative System zu speichernde Energiemenge geplant werden und auf diese Weise die Treibstoffeffizienz und der Fahrkomfort sichergestellt werden. Dazu wird eine Prognose der Verteilung der Höhenpositionen erstellt. Dies erfolgt wiederum aufgrund der Daten eines Navigationssystems.

In der europäischen Offenlegungsschrift EP 0 811 757 A2 ist eine Anlage zur Kontrolle elektrischer Zusatzsysteme in einem Fahrzeug vorgesehen. Auch dabei wird eine Leistungsbedarfsvorhersage aufgrund einer Positionsbestimmung in Verbindung mit einer Kartendatenbank erstellt. Basierend darauf wird die Energieversorgung der elektrischen Zusatzeinrichtungen durch die Batterie oder den Verbrennungsmotor gesteuert.

Die deutsche Patentschrift DE 198 04 204 C2 betrifft ein Fahrzeug zum Bewegen von Lasten. Dabei kann der Energiebedarf bei einem Arbeitszyklus festen Ablaufs durch Benutzereingabe bei einer Durchführung gespeichert werden, um aufgrund dieser Daten eine bessere Ansteuerung durch das Energiemanagementsystem zu ermöglichen. Dem liegt die Annahme zugrunde, dass diesem Arbeitszyklus weitere ähnliche oder gleiche Arbeitszyklen folgen werden.

Aufgabe der vorliegenden Erfindung ist es, eine Transporteinrichtung mit einem Energiemanagementsystem bzw. ein diesbezügliches Verfahren anzugeben mittels welchen der Energieverbrauch derart regulierbar ist, dass von der Transporteinrichtung die durch diese auszuführenden Aufgaben effektiver durchführbar sind. Eine Steigerung der Effektivität bezieht sich beispielsweise auf:
a) die Erzielung von Energieeinsparungen,
b) die Erzielung einer erhöhten Einsatzfähigkeit einer Transporteinrichtung, die einen Hybridantrieb aufweist,
c) und/oder die Erzielung von Einspareffekten durch die Möglichkeit der Auslegung der Transporteinrichtung und der Verwendung kleinerer Energiequellen und/oder kleinerer Energiezwischenspeicher.

Die Lösung dieser Aufgabe gelingt mittels eines Verfahrens zum Betrieb einer Transporteinrichtung nach Anspruch 1 bzw. durch eine Transporteinrichtung nach Anspruch 8. Die Ansprüche 2-7 und 9-10 geben vorteilhafte Ausgestaltungen an.

Ein Energiemanagementsystem ist bei einer Transporteinrichtung, insbesondere bei einem kraftstoffelektrischen Fahrzeug, welches eine Energiequelle, insbesondere einen Energiezwischenspeicher und einen elektrischen Energieverbraucher, insbesondere zumindest einen elektrischen Antrieb, aufweist, einsetzbar. Die Transporteinrichtung ist beispielsweise:
- ein Straddle Carrier - SC - bzw.
- ein Rubber Tired Gantry Crane - RTG - (gummibereifter Stapelkran) bzw.
- ein Automated Guided Vehicle - AGV- bzw.
- ein Schiff
- ein Omnibus
- oder dergleichen.

Das Energiemanagement ermöglicht unter Beteiligung des Energiespeichers eine optimale Energiewirtschaft z.B. von SC/RTG/AGV. Der Energiespeicher ist beispielsweise eine Batterie, ein Kondensator und/oder eine Schwungmasse. Die Energiequelle ist, wie obig bereits beschrieben, beispielsweise ein Dieselmotor, welcher aus einem Dieseltank Kraftstoff erhält und mit einem elektrischen Generator zur Stromerzeugung mechanisch gekoppelt ist.

Mittels des Energiemanagementsystems ist eine von einer Information über einen zukünftigen Energiebedarf zumindest eines Teils der Transporteinrichtung abhängige Steuerung und/oder Regelung:
a) der Energiebereitstellung durch den Energiezwischenspeicher und/oder
b) des Energieverbrauchs,
durchführbar.

Das Energiemanagement ist also dazu befähigt, z.B. in Kenntnis von zukünftig durchzuführenden Transportmaßnahmen, den Energiezwischenspeicher beispielsweise derart mit Energie zu befüllen, dass diese zukünftigen Transportmaßnahmen durchführbar sind. Die Durchführbarkeit betrifft beispielsweise die Energiemenge und/oder die zu Verfügung zu stellende Spitzenleistung.

Manche Transporteinrichtungen weisen keinen Energiezwischenspeicher auf. Die Information über den zukünftigen Energiebedarf wird dabei - wie es auch bei einem System mit Energiezwischenspeicher möglich ist - z.B. zur Vorsteuerung der Primärenergiequelle verwendet. Beispielsweise kann bei einem Bus mit Hybridantrieb ein Signal einer Ampelsteuerung dazu herangezogen werden, um bei Umschaltung auf ein Grünsignal einen Dieselmotor (Dieselmaschine) schon vor Beginn des Anfahrens mittels Elektromotoren mit mehr Kraftstoff zu versorgen, um einen Leistungseinbruch zu reduzieren. Mit einer derartigen Vorsteuerung lässt sich auch die Größe eines Zwischenenergiespeichers reduzieren.

Die Information über den zukünftigen Energiebedarf lässt sich beispielsweise auch dazu verwenden, die Drehzahl eines kraftstoffgetriebenen Motors wie z.B. eines Dieselmotors dann zu reduzieren, wenn die Transporteinrichtung wenig oder auch keine Energie benötigt. Damit lässt sich auch Energie einsparen, da der kraftstoffgetriebene Motor jeweils für die ihm abverlangte Leistung mit einer optimalen Drehzahl gefahren werden kann.

Die elektrische Versorgung von beispielsweise mobilen Hafenumschlagsgeräten als eine Transporteinrichtung ist immer für den maximal zu erwartenden Betriebsfall ausgelegt. Diese Spitzenlast muss vom System bewältigt/abgedeckt werden. Die tatsächlichen Anforderungen liegen jedoch erheblich niedriger. Durch ein Energiemanagementsystem ist es möglich, erhebliche Einsparungen im Kraftstoffverbrauch zu erzielen. Bei Teillastbetrieb wird die Drehzahl z.B. eines Dieselaggregates, welches als Energiequelle dient, dem Leistungsbedarf angepasst. Mittels elektrischer Speicher als Energiezwischenspeicher wird zurückgespeiste Energie beim Senken der Last gespeichert. Die Hafenumschlagsgeräte werden hierdurch erheblich sauberer und die Energieversorgung kann kleiner dimensioniert werden.

Weiterhin ist das Energiemanagement derart ausbildbar, dass der Energieverbrauch beeinflussbar ist. Sind eine oder mehrere Transportmaßnahmen mit der zur Verfügung stehenden Energiemenge im Energiezwischenspeicher zusammen mit der vorzugsweise im optimalen Betriebspunkt betriebenen Energiequelle nicht durchführbar, so wird mittels des Energiemanagements die Abfolge von Transportmaßnahmen derart geändert, dass nach einer abgelaufenen Zeit, in welcher der Energiezwischenspeicher aufladbar ist, die Transportmaßnahme durchführbar ist. Die Information über einen zukünftigen Energiebedarf ist beispielsweise:
- eine Lastprognose und/oder
- eine Information über eine benötigte Spitzenlast und/oder
- eine Information über Transportaufgaben/Transportmaßnahmen, aus denen der Lastbedarf ermittelbar ist, und/oder
- usw.
Als Information über den zukünftigen Energiebedarf sind abhängig vom Typ und/oder dem Einsatz der Transporteinrichtung beispielsweise auch folgende Daten heranziehbar:
- Gewicht eines Transportgutes (z.B. Container)
- Steigung bzw. Gefälle einer Wegstrecke
- Umleitungsinformationen bezüglich der Länge einer neuen Wegstrecke
- Gegenwind bzw. Rückenwind
- Meeresströmungen bei Schiffen
- usw.

Diese Informationen weisen vorteilhafter Weise einen Zeitbezug auf, so dass jeweils bestimmbar ist, wann welche Last von der Energiequelle und/oder dem Energiezwischenspeicher abverlangt wird. In diesem Zusammenhang ist unter Last nicht eine Last zu verstehen, die zu transportieren oder zu heben bzw. zu senken ist. Unter Last ist die elektrische Last zu verstehen, also die elektrische Leistung.

Gemäß der Erfindung können sich dabei die im folgenden beschriebenen Vorteile einstellen:
- Die Auslegung des Verbrennungsmotors gelingt deutlich kleiner als bisher, weil die Leistungsspitzen gezielt durch den Energiezwischenspeicher abgedeckt werden und nicht durch den Verbrennungsmotor / Generator erbracht werden müssen.
- Eine Kraftstoffeinsparung im Betrieb, da die rückgespeiste Energie beim Senkbetrieb bzw. beim generatorischen Bremsbetrieb in den Energiespeicher gespeist wird und nicht als Wärme in einem Widerstand vernichtet wird.
- Eine bessere / optimalere Ausnutzung des Dieselmotors als Energiequelle und wiederum Kraftstoffeinsparung durch den Betrieb am optimalen Arbeitspunkt des Dieselmotors.
- Eine Reduzierung der Wartungsaufwendungen durch optimalere/saubere Ausnutzung des kleineren Dieselmotors.

Die Vorteile beschränken sich dabei jedoch nicht auf die spezielle Verwendung z.B. eines Dieselmotors. Als Energiequelle ist beispielsweise auch eine Brennstoffzelle einsetzbar.

In einer vorteilhaften Ausgestaltung des Energiemanagementsystem ist die Information über einen zukünftigen Energiebedarf mittels des Energiemanagementsystems erstellbar und/oder speicherbar.

Mittels des Energiemanagementsystem lässt sich also beispielsweise eine Lastprognose erstellen. Die Lastprognose ist vorteilhafter Weise auch speicherbar, wobei nach wegen einer Lastprognose geänderten Abfolge von Transportmaßnahmen wiederum eine Lastprognose erstellbar ist. Zur Erstellung der Lastprognose werden dem Energiemanagementsystem beispielsweise Informationen über zukünftige Transportmaßnahmen übermittelt. Diese Informationen betreffen z.B. das Gewicht zu transportierender oder zu hebender bzw. zu senkender Lasten. Des weiteren stehen dem Energiemanagementsystem z.B. Informationen über energieverbrauchende Systeme, wie z.B. elektrische Antriebe, einer Transporteinrichtung zur Verfügung. Weitere Informationen betreffen beispielsweise die Leistung der Energiequelle, die optimalen Betriebspunkte der Energiequelle, den Energieinhalt des Energiezwischenspeichers, usw.

Das Energiemanagement ist derart ausbildbar, dass mittels dieses Systems zumindest eines der folgenden Betriebsmittel einer Transporteinrichtung steuerbar und/oder regelbar ist:
- die Energiequelle
- der Energiezwischenspeicher
- der elektrische Energieverbraucher.

In einer weiteren vorteilhaften Ausgestaltung der Erfindung weist die Transporteinrichtung ein Mittel zur Energierückgewinnung auf. Ein derartiges Mittel ist beispielsweise ein rückspeisefähiger elektrischer Antrieb. Der elektrische Antrieb weist dabei eine elektrische Maschine und einen rückspeisefähigen Stromrichter auf. Eine Rückspeisung erfolgt beispielsweise dann, wenn eine Last abgesenkt wird und der elektrische Motor als eine Art Bremseinrichtung dient. Ein weiterer Anwendungsfall ist dann gegeben, wenn eine sich bewegende Transporteinrichtung gebremst werden soll. Auch dabei ist der elektrische Motor als Motorbremse nutzbar. Dies erfolgt beispielsweise bei elektrisch angetriebenen Personenkraftwagen oder bei Omnibussen.

Das Energiemanagementsystem ist auch dahingehend weiterbildbar, dass mittels dieses Systems nicht nur eine Transporteinrichtung optimierbar ist, sondern dass zwei oder mehrere Transporteinrichtungen mittels des Energiemanagements optimierbar sind. Beispielsweise kann so in einem Containerterminal einer Hafenanlage eine Optimierung (Reduzierung) des Energieverbrauchs durchgeführt werden. Können beispielsweise zwei oder mehrere Hebeeinrichtungen einen Transport eines Containers durchführen und sind dabei vor allem Hebevorgänge notwendig, so ist vom Energiemanagementsystem ein Kran auswählbar, welcher viel Energie im Energiezwischenspeicher aufweist. Ist bei einer Transportaufgabe ein Container beispielsweise vorzugsweise abzusenken und lässt sich daraus Energie mittels Rückspeisung gewinnen, so wird mittels des Energiemanagementsystem eine Hebeeinrichtung ausgewählt, deren Energiezwischenspeicher aufzufüllen ist. Dadurch lässt sich vermeiden, dass eine Hebeeinrichtung mit vollem Energiezwischenspeicher durch Absenken eines Containers Energie rückspeist, diese nicht mehr speichern kann und die überschüssige Energie in einem Bremswiderstand vernichtet wird.

Die vorteilhafte Erweiterung des Energiemanagementsystems auf die Steuerung bzw. Regelung mehrere Transporteinrichtungen ist nicht alleine auf Hebezeuge, wie z.B. einen Kran, beschränkt, sondern ist beispielsweise auch bei AGVs oder anderen Transporteinrichtungen anwendbar.

Eine weitere Ausgestaltung des Energiemanagementsystems ergibt sich durch die Verwendung einer Fuzzy-Logik zur Durchführung des Energiemanagements. Gerade die Fuzzy-Logik eignet sich besonders gut zur Auswertung von Informationen bezüglich eines zukünftigen Energiebedarfs. Dies trifft insbesondere auf den Fall der Erstellung einer Lastprognose zu. Vorteilhafterweise ist das Energiemanagementsystem derart weitergebildet, dass mit dessen Hilfe aufgrund von Daten der Vergangenheit eins Lastprognose für die Zukunft erstellbar ist. Die Fuzzy-Logik ist auch derart ausbildbar, dass mittels dieser eine automatische Anpassung von Parametern erfolgt. Die Änderung von Parametern ist z.B. durch Temperaturänderungen, welche die Kapazität einer Batterie beeinflussen, notwendig.

Durch ein Verfahren zum Betrieb einer Transporteinrichtung, insbesondere für ein kraftstoffelektrisches Fahrzeug, welche eine Energiequelle, einen Energiezwischenspeicher und einen oder mehrere elektrische Energieverbraucher, insbesondere zumindest einen elektrischen Antrieb aufweist, ist die Aufgabe der Erfindung gelöst. Bei dem Energiemanagementsystem wird eine Information über einen zukünftigen Energiebedarf, zumindest eines Teils der Transporteinrichtung, bereitgestellt, wonach eine Steuerung und/oder Regelung:
a) der Energiebereitstellung durch den Energiezwischenspeicher und/oder
b) des Energieverbrauchs
durchgeführt wird.

Hieraus ergeben sich die bereits obig beschriebenen Vorteile. Auch weiterführende Ausgestaltungen sind obig bereits inhaltlich beschrieben. So wird vorteilhafterweise mittels der Information über zumindest eine auszuführende Transportmaßnahme eine Information über einen zukünftigen Energiebedarf erstellt. Mittels des Energiemanagementsystems wird beispielsweise auch der Energieverbrauch der Transporteinrichtung derart gesteuert und/oder geregelt, dass abhängig von der Lastprognose ein zukünftiger Energiebedarf der Transporteinrichtung beeinflusst wird.

Aufgrund einer Lastprognose werden z.B. auch zukünftige geplante Betriebszustände der Transporteinrichtung geändert, wobei danach eine neue Lastprognose erstellt wird.

Bei einer Weiterbildung des Verfahrens wird mit der Information über eine auszuführende Transportmaßnahme zumindest eine zukünftige Lastspitze ermittelt, wonach die zukünftige Lastspitze mit der maximal möglichen Lastspitze verglichen wird und bei Überschreitung der maximal möglichen Lastspitze:
a) durch Abänderung der Transportmaßnahme der Energieverbrauch der Transporteinrichtung derart beeinflusst wird, dass die zukünftige Lastspitze nicht die maximal mögliche Lastspitze überschreitet und/oder
b) durch Energieeinspeisung in den Energiezwischenspeicher die maximal mögliche Lastspitze erhöht wird.

Auch dies führt zu einer effektiveren Auslegung und einem effektiverem Einsatz der Transporteinrichtung.

In einer vorteilhaften Ausgestaltung sind alle Stromrichter sowie die gesamte Steuerungsebene einer Transporteinrichtung datentechnisch mit dem Energiemanagementsystem verbunden und liefern diesem Informationen, welche in einem zentralen Energiemanagementsystem der Transporteinrichtung ausgewertet werden. Anhand dieser Informationen wird die Regelung/Steuerung der Stromrichter optimiert. Hierdurch wird der Energiefluss so geregelt, dass zu erwartende Lastspitzen bewältigt werden können und gleichzeitig eine Kraftstoffreduzierung erreicht wird.
Durch eine Kombination von Kransteuerung, Dieselsteuerung und Energiemanagement mit mehreren Energielieferanten in Form der Energiequelle als Primärenergiequelle (z.B. Dieselmotor mit Generator) und dem Energiezwischenspeicher sind Einsparungen von bis zu 70 % Kraftstoff gegenüber bislang üblichen Krananlagen erzielbar. Auch erwartete Spitzenlastanforderungen können durch das System, speziell durch den Energiezwischenspeicher, abgedeckt werden. Hierdurch ist eine kleinere Dimensionierung der primären Energiequelle möglich. Das Energiemanagementsystem ist mittels Parametern optimierbar und verfügt vorzugsweise über eine automatische Optimierung mittels z.B. einer Fuzzy-Logik.

Die folgende Aufstellung dient als Beispiel für die Vorteilhaftigkeit der Erfindung:

| Beispiel einer RTG-Anlage | alt | erfindungsgemäß |
|---|---|---|
| | | |
| Stapeln von 2 Containern | 5,75 kWh | 4,64 kWh |
| Energie im Bremswiderstand | 1,58 kWh | |
| Energie im Energiezwischenspeicher (z.B. Ultracaps) | | 0,66 kWh |
| Umsetzen zweier Container | 2,44 kWh | 0,56 kWh |
| Energie im Bremswiderstand | 3,86 kWh | |
| Energie im Energiezwischenspeicher (z.B. Ultracaps) | | 1,90 kWh |
| Gesamte benötigte Energie für 4 Containerbewegungen | 8,19 kWh | 2,64 kWh |
| Energie bei durchschnittlich 20 Bewegungen pro Stunde | 40,97 kWh | 13,20 kWh |
| Einsparung von Kraftstoff in % | | 68% |

Derart ergeben sich beispielhaft auch auf ein ganzes Betriebsjahr eines Kranes Vorteile, wie diese in der nachfolgenden Darstellung als Beispiel aufgezeigt sind:

| Beispiel von auf ein Jahr bezogene Daten eines Krans | | |
|---|---|---|
| Laufleistung der Dieselmaschine | 600,00 h/Monat | |
| Anzahl der Containerbewegungen | 4.700,00 | |
| Durchschnittliche Dauer der Containerbewegung | 180,00 s | |
| | alt | erfindungsgemäß |
| Energieverbrauch für Containerbewegungen | 9.627,40 kWh | 3.102,24 kWh |
| Benötigter Treibstoff | 4,00 kWh/l | |
| Für die Containerbewegungen benötigter Kraftstoff | 2.406,85 l | 775,56 l |
| Zeit für die Containerbewegungen | 235,00 h | |
| Zeit im Wartebetrieb | 365,00 h | |
| Durchschnittlicher Treibstoffverbrauch im Wartebetrieb | 6,00 l/h | |
| Treibstoffverbrauch im Wartebetrieb | 1.971,00 | |
| Benötigter Kraftstoff pro Monat | 4.377,85 l | 775,56 l |

Im Wartebetrieb lässt sich der Energieverbrauch bei einem Hybridfahrzeug mit kraftstoffelektrischem Antrieb z.B. dadurch senken, dass der Dieselmotor abgestellt wird. In dem Energiezwischenspeicher ist dabei stets noch so viel Energie vorzuhalten, dass der Dieselmotor mit dieser Energie und z.B. einem dann als Motor fungierenden Generator startbar ist.

Beispielhafte Ausgestaltungen der Erfindung sind in den nachfolgend beschriebenen Figuren offenbart. Dabei zeigt:
- FIG 1: eine Containerbrücke
- FIG 2: mögliche Transportmaßnahmen einer Hebeeinrichtung
- FIG 3: einen Energiefluss bei Transportmaßnahmen
- FIG 4: Einrichtungen für die· Energieversorgung und den Energieverbrauch einer Transporteinrichtung
- FIG 5: ein Diagramm über Betriebspunkte eines Dieselmotors
- FIG 6: Energiemanagementsystem mit implementierter Fuzzy-Logik
- FIG 7: ein Diagramm von Energieflüssen
- FIG 8: ein weiteres Diagramm eines Energieflusses und
- FIG 9: eine führerlose Transporteinrichtung

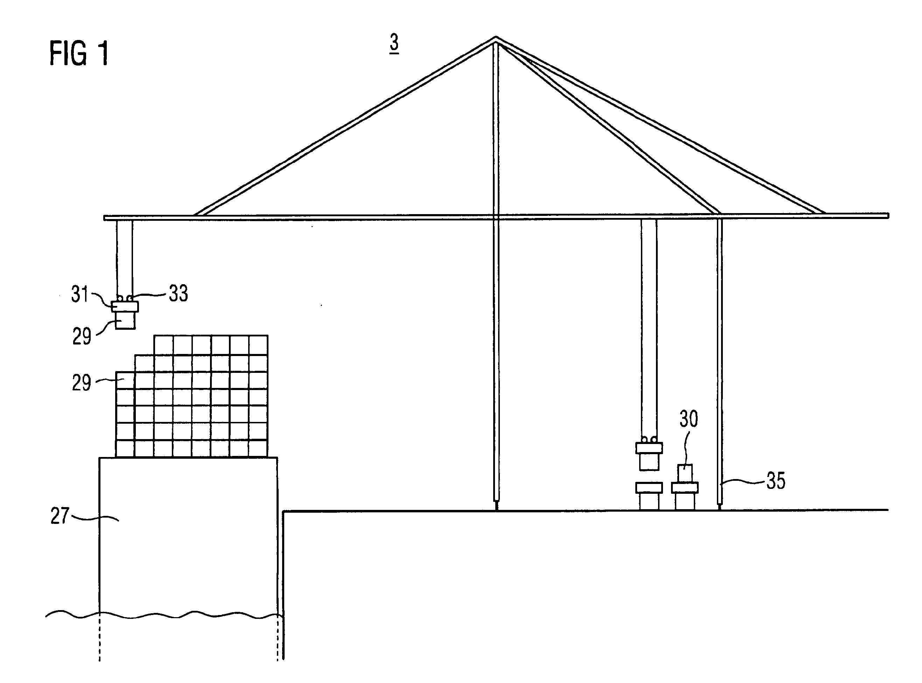

Die Darstellung gemäß FIG 1 zeigt als Beispiel für eine Transporteinrichtung eine Containerbrücke 3. Mit Hilfe der Containerbrücke 3 ist ein Containerschiff 27 beladbar und/oder löschbar. Container sind mit Hilfe eines Spreaders 31 und einer Laufkatze 33 transportierbar. Der Antrieb erfolgt mittels elektrischer Antriebe. Die Container werden beispielsweise auf führerlose Transportfahrzeuge 35 verladen. Sowohl die Containerbrücke 3 als auch das führerlose Transportfahrzeug stellen Beispiele für Transporteinrichtungen dar.

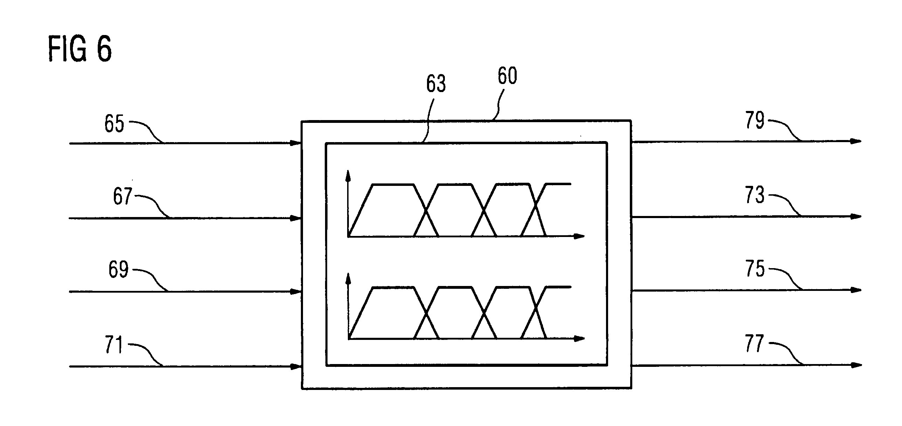

Die Containerbrücke 3 ist auch ein Beispiel für ein Hafenumschlagsgerät, welches zum Heben und Absetzen von Lasten nutzbar ist. Das Hafenumschlaggerät ist derart ausbildbar, dass während des Absetzens ein Hubwerksmotor Energie zurück in ein Bordnetz speist. Diese Energie wird vorteilhaft einem Energiezwischenspeicher gespeichert. Das Abrufen der gespeicherten Energie wird durch ein Energiemanagementsystem koordiniert, wodurch beispielsweise gezielt zu erwartende Leistungsspitzen abgedeckt werden können. Das Besondere dieses System ist einmal die optimale Auslegung aller Systemkomponenten, als auch das Energiemanagement. Die Implementierung von mehreren Antrieben unterschiedlicher Leistung erfordert ein komplexes System zur optimalen Energienutzung. Sowohl der Energiezwischenspeicher als auch das Energiemanagementsystem werden beispielsweise in FIG 6 dargestellt.

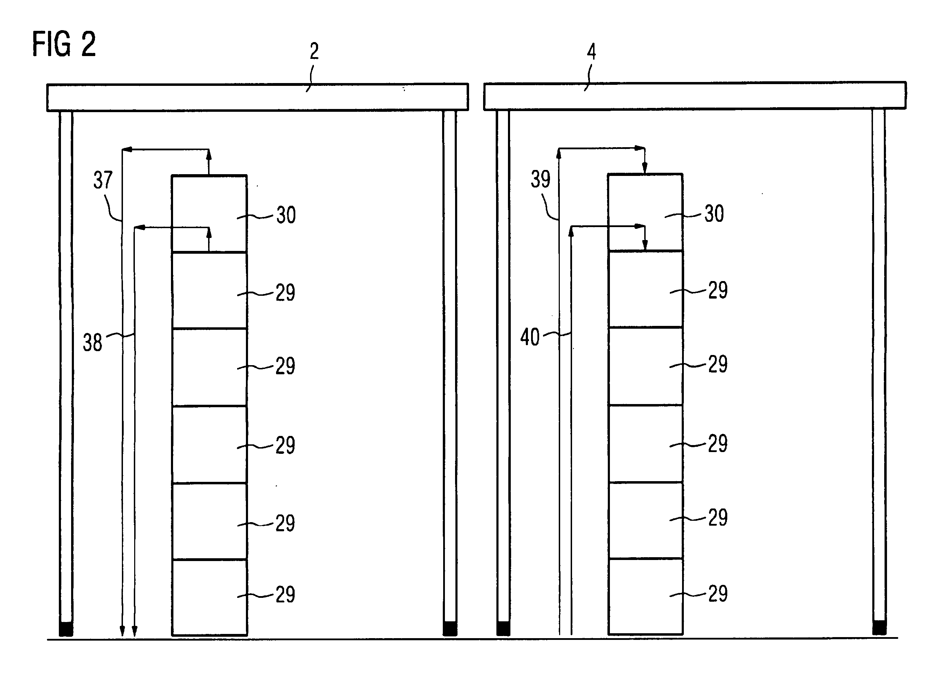

Das Heben 39 und Senken 37 von Containern 29,30 als eine Last ist in FIG 2 dargestellt. Dabei zeigt FIG 2 Containerbrücken 2, 4. Bei der Containerbrücke 2 sind Senkvorgänge 37,38 (Absetzvorgang) von Containern 29,30 dargestellt. Die beim Senken der Last abgegebene Energie wird vorteilhafter Weise in einem Energiespeicher gespeichert. Zum Heben der Last wird diese Energie dem Energiespeicher (z.B. eine Batterie) entnommen. Für den Fall, dass der Container 30 die oberste Stapelposition einnimmt, so ist dies der "worst case", also der ungünstigste Fall, bei einem Hebevorgang 39 (Stapelvorgang) an der Containerbrücke 4. Zur Positionierung des Containers 30 ist also am meisten Energie aufzuwenden. Der Container 30 weist dann jedoch auch die höchste potentielle Energie auf, so dass beim Absenken 37 am meisten Energie freisetzbar ist. Dies Energie wird vorteilhafter Weise mittels eines rückspeisefähigen Antriebes in einem Energiezwischenspeicher gespeichert. Dies ist in einer der nachfolgenden Figuren gezeigt. Mit dem Heben (Stapeln) 40 der Container 29 und dem Senken (Absetzen) 37 ist weniger Energieumsatz verbunden. Das Energiemanagementsystem hat nun z.B. die Aufgabe stets genügend Energie vorzuhalten um eine Transportmaßnahme 37, 38, 39, 40 ausführbar zu halten. Ist nicht genügend Energie vorhanden - z.B. im Energiezwischenspeicher - für eine vorgesehene Transportmaßnahme - z.B. das Absetzen und/oder Stapeln von Containern - so ist beispielsweise eine Transportmaßnahme auszuwählen für welche die vorhandene Energie ausreicht.

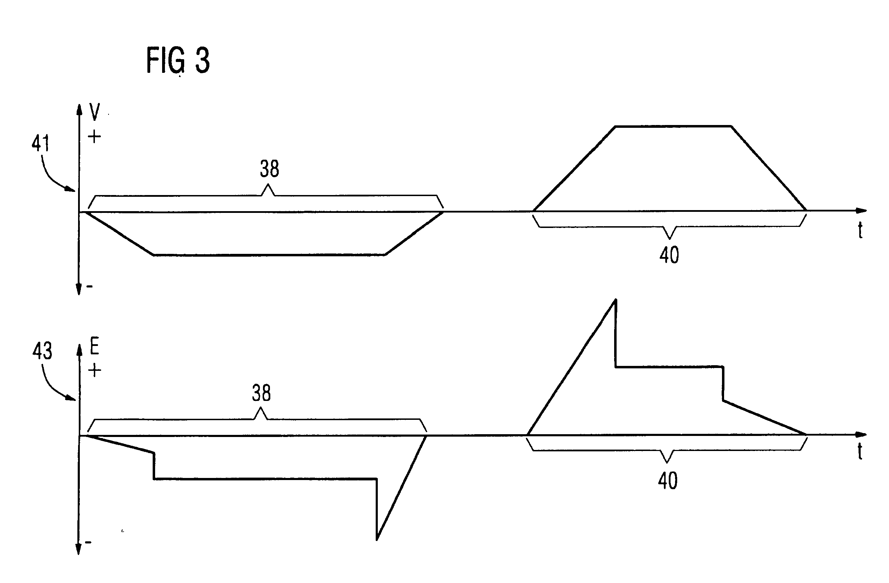

Die Darstellung gemäß FIG 3 zeigt in einer ersten Diagramm 41 über die Zeit t die Geschwindigkeit v eines elektrischen Antriebs beispielsweise bei einem Hebevorgang 40 und einem Absenkvorgang 38, wie diese bereits in FIG 2 dargestellt sind. In einem zweiten Diagramm 43 ist über die Zeit t die Energie E aufgetragen, welche für das Heben und Senken gemäß Diagramm 41 notwendig ist. Die für das Heben benötigte Energie ist ebenso berechenbar, wie die durch das Absenken freisetzbare Energie. Somit ist eine Energiebilanz erstellbar, welche für das Energiemanagement nutzbar ist.

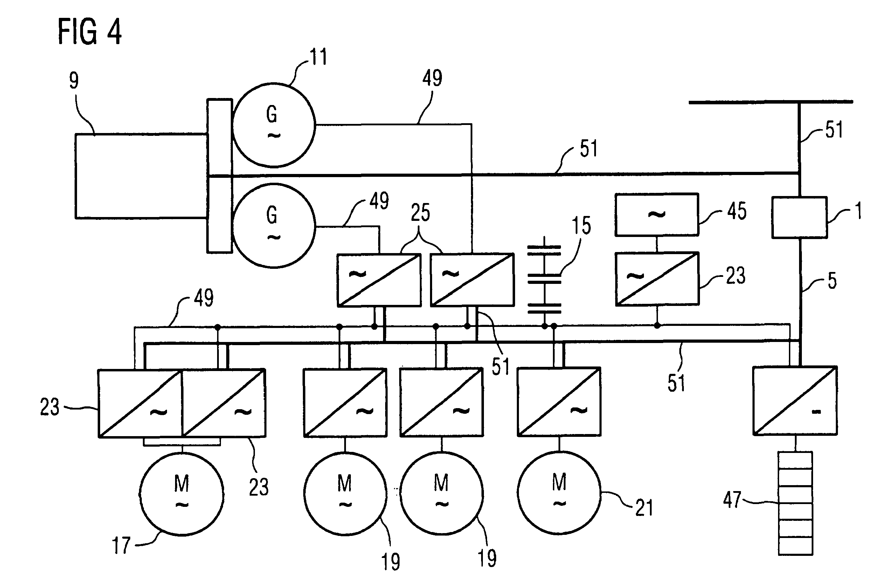

Die Darstellung gemäß FIG 4 zeigt eine beispielhafte Anordnung von:
- einer Energiequelle 9 als Dieselmotor mit angeschlossenem elektrischen Generator 11,
- elektrischen Antrieben, welche Stromrichter 23 und elektrische Maschinen 17, 19, 21 aufweisen,
- einer elektrischen Hilfseinrichtungen 45 wie z.B. einer Sensoreinrichtung,
- einem Energiemanagementsystem 1,
- einem Energiezwischenspeicher in der Ausprägung als Kondensatoren 15 und
- einem Bremswiderstand 47.

Die elektrischen Maschine 17 dient dem Heben und Senken von Lasten. Die elektrische Maschinen 19 dienen dem Kranfahrwerk (Gantry). Die elektrische Maschine 21 dient dem Trolly. Mittels eines Energiebussystems 49 ist die mittels der Energiequelle 11 gewonnenen elektrische Energie verteilbar. Mittels eines Datenbussystems 51 ist das Energiemanagementsystem 1 mit steuerbaren und/oder regelbaren Komponenten verbunden. Diese Komponenten sind beispielsweise der Generator 11, die Verbrennungsmaschine 9, die elektrischen Maschinen 17, 19 und 21 und/oder die Stromrichter 25. Das Datenbussystem 51 dient insbesondere zur Übertragung von Soll- und Ist-Werten. Auch Informationen über die Position der Last oder der Twistlocks (Drehstifte) - in FIG 4 nicht dargestellt sind an das Energiemanagement 1 übermittelbar.

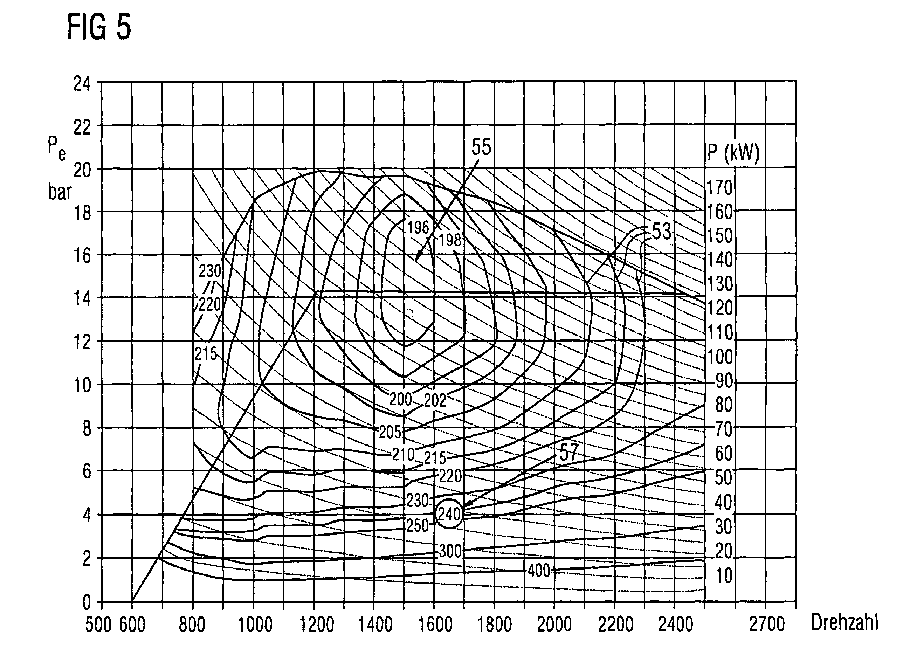

Der Generator 11 wird beispielsweise immer, abhängig von erforderlichen Energie / Leistung, drehzahlgeregelt im optimalen Lastpunkt 55 (siehe FIG 5) gefahren. Bei generatorischen Betrieb wird der Generator 11 z.B. ein Dieselaggregat 9 treiben und die Brennstoffeinspritzung mittels des Energiemanagementsystems auf null gesteuert. Weiterhin ermöglicht das Energiemanagementsystem z.B. ein Stillsetzen des Dieselaggregates 9 als Primärenergiequelle, wobei die rotierende Energie die hierbei freikommt in einem in dieser Figur nicht dargestellten Energiezwischenspeicher übernommen wird. Anschließend kann über den Generator 11 das Dieselaggregat 9 wieder gestartet werden. Dieser Wideranlauf kann dann mittels des als Motor betriebenen Generators 11 auch wieder sehr schnell z.B. binnen ca. 200 ms erfolgen. Binnen 2 Sek. kann 100 % Last geliefert werden.

Dieselelektrische Hafenumschlagsgeräte (in FIG 4 nicht dargestellt) werden heutzutage mit dieselmotorgetriebene Synchrongeneratoren 11 betrieben. Die Drehzahl vom Aggregat ist konstant um eine konstante Frequenz und konstante Spannung für die Hauptantriebe und Verbraucher am Kran zu erhalten. Beim Senken der Last wird Energie durch Bremswiderstände aufgenommen. Erfindungsgemäß ist z.B. bei Verwendung eines Umrichters zusammen mit dem Energiemanagementsystem die Dauerhafte konstante Drehzahl nicht mehr notwendig.

Die Darstellung gemäß FIG 5 zeigt Betriebspunkte eines Dieselmotors. Dabei wird ersichtlich dass der Dieselmotor vorteilhafte Betriebspunkte aufweist, bei denen ein minimaler Verbrauch an Diese möglich ist. Im Diagramm sind Linien 53 mit gleichem Dieselverbrauch 57 in g/kWh dargestellt. In einem optimalen Betriebspunkt ist der Dieselmotor bezüglich des Energieverbrauchs optimal genutzt. Eine Aufgabe eines Energiemanagementsystems ist es beispielsweise den Betrieb einer Verbrennungsmaschine bzw. eines Dieselmotors im oder im Bereich des optimalen Betriebspunktes 55 zu halten. Es gelingt insbesondere dann wenn mittels einer Lastprognose der zukünftige Energiebedarf bekannt und/oder geschätzt ist. In vorteilhafter Weise sind in der Lastprognose derart präzise Daten zugänglich, dass der zukünftige Energiebedarf sehr exakt ermittelbar ist.

Die Darstellung gemäß FIG 6 zeigt ein Energiemanagementsystem 60 mit einer symbolisch dargestellten integrierten Fuzzy-Logik 63. Die Darstellung zeigt welche möglichen Eingangssignale in einem Energiemanagementsystem nutzbar sind. Eingangssignale sind z.B.:
- Twistlock signal 65 für die Vorsteuerung,
- Höhe der Last 67,
- Gewicht der Last 69,
- Im Energiezwischenspeicher vorhandenen Energie 71
- ...

Ausgangssignale des Energiemanagementsystems sind beispielsweise Sollgrößen für die:
- Drehzahl des Dieselmotors 73,
- Drehzahl der elektrischen Maschinen zum Heben, Senken, Fahren 75,
- Energievernichtung im Bremswiderstand 77 und/oder
- Energieaufnahme im Energiezwischenspeicher 79.

Die symbolisch dargestellte Fuzzy-Logik ermöglicht es dem Energiemanagementsystem insbesondere sich selbst zu optimieren. Mit Hilfe einer kontinuierlichen Optimierung sind Stellgrößen derart anpassbar, dass mit diesen sehr gute Ergebnisse erzielt werden können.

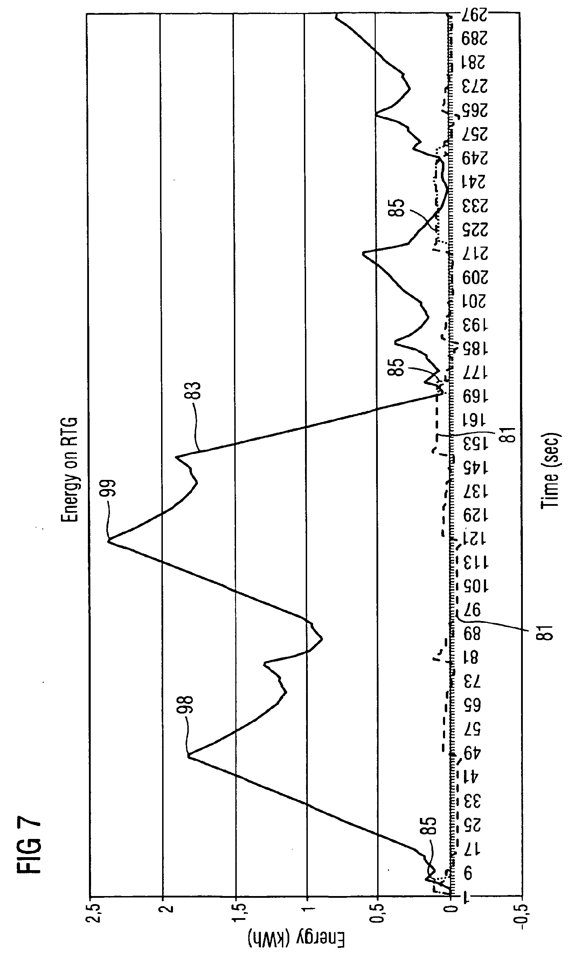

Die Darstellung gemäß FIG 7 zeigt einen Lastfluss 81, den Energieinhalt im Energiezwischenspeicher 83 und die vom Dieselmotor abgegebene Energie 85. Durch eine Vorsteuerung in der Form einer Information über einen zukünftigen Energiebedarf ist ein Regelungsverzug bezüglich der Bereitstellung benötigter Energie vermeidbar. Es wird also nicht gewartet bis Energie abverlangt wird, sondern es wird im Vorfeld gerechnet, welche Energie notwendig ist und basierend hierauf wird das Energiemanagementsystem aktiv steuern. Hierdurch entsteht ein System ohne Totzeiten.

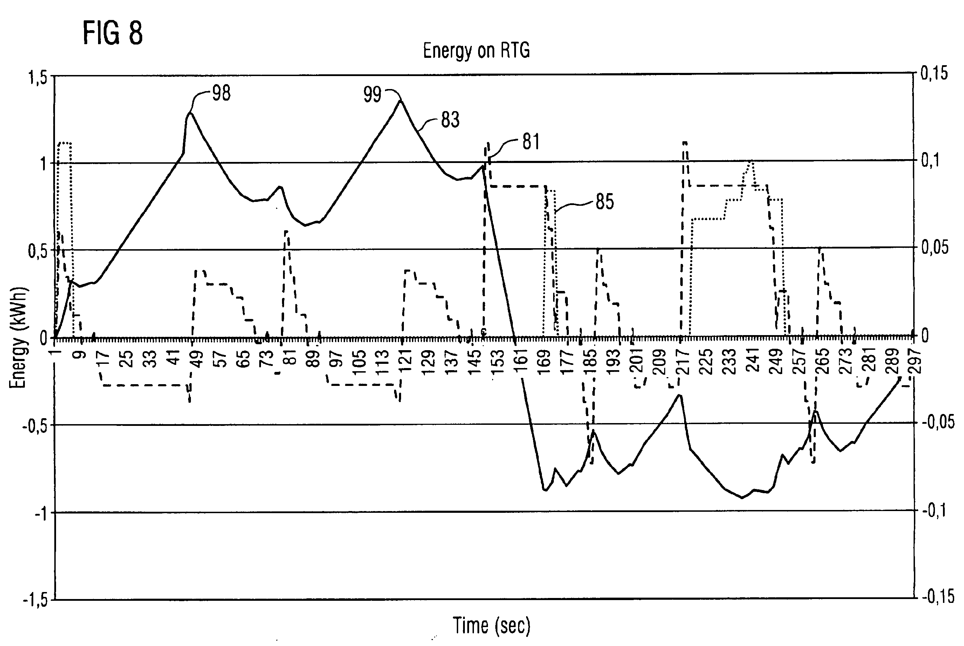

Die Darstellung gemäß FIG 8 zeigt ein weiteres Beispiel für einen Lastfluss 81, den Energieinhalt im Energiezwischenspeicher 83 und die vom Dieselmotor abgegebene Energie 85 für das Heben und Senken von Containern. Dabei ist im Diagramm die Energie des Energiezwischenspeichers auf der linken Seite aufgetragen. Die Energie für den Lastfluss 81 auf einem Energiebussystem der Transporteinrichtung und für die abgegebene Energie der Primärenergiequelle 85 ist auf der rechten Seite des Diagramms aufgetragen. Durch eine Spreizung der Skalierung ist eine detailliertere Darstellung ermöglicht.

Sowohl in FIG 7 als auch in FIG 8 erfolgt im zeitlichen Ablauf ein erstes Absenken eines Containers und danach ein zweites Absenken eines Containers, so dass die im Energiezwischenspeicher gespeicherte Energie 83 zwei große Spitzen 98, 99 aufweist. Nach dem Absenken erfolgt zumindest ein Hebevorgang.

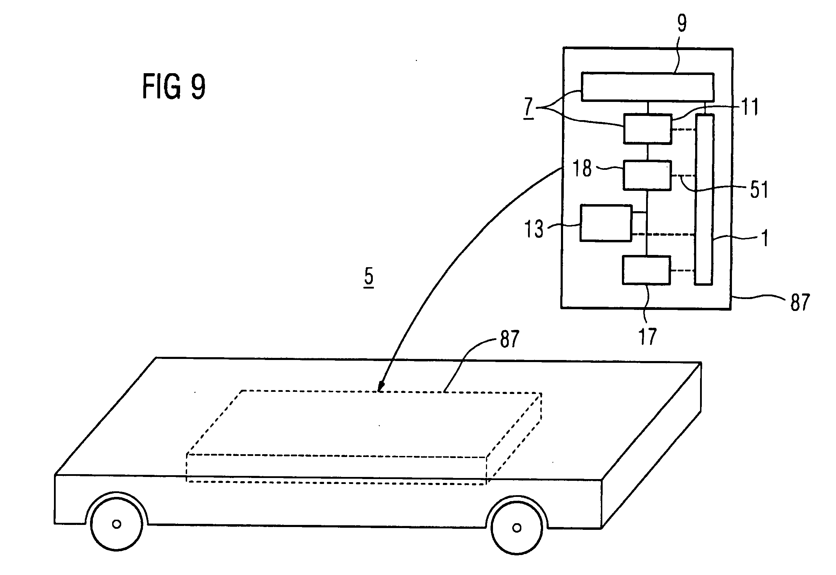

Die Darstellung gemäß FIG 9 zeigt ein führerloses Fahrzeug 5 welches ein System 87 aufweist. Das System 87 weist eine Energiequelle 7, einen Energiezwischenspeicher 13, eine elektrische Maschine 17 und 18 und ein Energiemanagement 1 auf. Die Energiequelle 7 weist einen elektrischen Generator 11 und eine Verbrennungsmaschine 9 auf. Das Fahrzeug ist also ein Hybridfahrzeug. Mit Hilfe des Datenbussystems 51 ist das Energiemanagementsystem 1 mit den Komponenten des Systems 87 verbunden, welche von diesem Datensignale zu empfangen und/oder welche zu diesen Datensignale zu senden hat.

## Patentansprüche

1. Verfahren zum Betrieb einer Transporteinrichtung mit einem Energiemanagementsystem (1), umfassend eine Primärenergiequelle (7, 9, 11), einen Energiezwischenspeicher (13, 15) und einen oder mehrere elektrische Energieverbraucher (17, 19, 21), insbesondere zumindest einen elektrischen Antrieb (17, 19, 21, 23, 25), wobei
- mittels einer Information über zumindest eine auszuführende Transportmaßnahme eine Information über einen zukünftigen Energiebedarf erstellt wird,
- dem Energiemanagementsystem (1) die Information über einen zukünftigen Energiebedarf zumindest eines Teils der Transporteinrichtung (3, 5) bereitgestellt wird,
- eine von der Information über einen zukünftigen Energiebedarf abhängige Steuerung und/oder Regelung
- der Energiebereitstellung durch den Energiezwischenspeicher (13, 15) und/oder
- des Energieverbrauchs
durchgeführt wird,
**dadurch gekennzeichnet, dass** aufgrund der Information über einen zukünftigen Energiebedarf die Abfolge von Transportmaßnahmen der Transporteinrichtung (3, 5) geändert wird und eine neue Information über den zukünftigen Energiebedarf erstellt wird.

2. Verfahren nach Anspruch 1,
**dadurch gekennzeichnet, dass** die Information über einen zukünftigen Energiebedarf mittels des Energiemanagementsystems (1) erstellt und/oder gespeichert wird.

3. Verfahren nach Anspruch 1 oder 2,
**dadurch gekennzeichnet, dass** das Energiemanagementsystem (1) das Energiemanagement unter Verwendung einer Fuzzy-Logik durchführt.

4. Verfahren nach Anspruch 3,
**dadurch gekennzeichnet, dass** aufgrund von Daten der Vergangenheit eine Lastprognose als Information über einen zukünftigen Energiebedarf erstellt wird.

5. Verfahren nach einem der vorangehenden Ansprüche,
**dadurch gekennzeichnet, dass** mit der Information über eine auszuführende Transportmaßnahme zumindest eine zukünftige Lastspitze ermittelt wird, wonach die zukünftige Lastspitze mit der maximal möglichen Lastspitze verglichen wird und bei Überschreitung der maximal möglichen Lastspitze:
c) durch Abänderung der Transportmaßnahme der Energieverbrauch der Transporteinrichtung (3, 5) derart beeinflusst wird, dass die zukünftige Lastspitze nicht die maximal mögliche Lastspitze überschreitet und/oder
d) durch Energieeinspeisung in den Energiezwischenspeicher (13, 15) die maximal mögliche Lastspitze erhöht wird.

6. Verfahren nach einem der vorangehenden Ansprüche,
**dadurch gekennzeichnet, dass** die Primärenergiequelle (7, 9, 11) zeitweise ausgeschaltet wird.

7. Verfahren zum Betrieb einer Transporteinrichtung (3, 5) nach einem der Ansprüche 5 bis 6,
**dadurch gekennzeichnet, dass** aufgrund einer Information über einen zukünftigen Energiebedarf zukünftige geplante Betriebszustände der Transporteinrichtung (3, 5) geändert werden und insbesondere eine neue Information über einen zukünftigen Energiebedarf erstellt wird.

8. Transporteinrichtung mit einem Energiemanagementsystem (1), umfassend eine Primärenergiequelle (7, 9, 11), einen Energiezwischenspeicher (13, 15) und einen oder mehrere elektrische Energieverbraucher (17, 19, 21), insbesondere zumindest einen elektrischen Antrieb (17, 19, 21, 23, 25), wobei die Transporteinrichtung zur Durchführung des Verfahrens nach einem der Ansprüche 1 bis 8 angepaßt ist.

9. Transporteinrichtung nach Anspruch 8,
**dadurch gekennzeichnet, dass** sie ein Mittel zur Energierückgewinnung aufweist.

10. Transporteinrichtung nach Anspruch 8 oder 9,
**dadurch gekennzeichnet, dass** sie ein Fahrzeug (5) ist, wobei das Fahrzeug (5) insbesondere ein automatisch geführtes Fahrzeug ist, welches insbesondere zum Transport von Gütern und/oder Personen vorgesehen ist.

## Claims

1. Method for operating a transport device having an energy management system (1), comprising a primary energy source (7, 9, 11), an energy buffer store (13, 15) and one or more electrical energy consumers (17, 19, 21), in particular at least one electrical drive (17, 19, 21, 23, 25), wherein
- an item of information on a future energy requirement is produced by means of an item of information on at least one transport measure to be carried out,
- the item of information on a future energy requirement of at least part of the transport device (3, 5) is made available to the energy management system (1),
- control and/or regulation
- of the provision of energy by the energy buffer store (13, 15) and/or
- of the energy consumption
is implemented which is dependent on the item of information on a future energy requirement, **characterized in that** the sequence of transport measures of the transport device (3, 5) is changed on the basis of the item of information on a future energy requirement and a new item of information on the future energy requirement is produced.

2. Method according to Claim 1, **characterized in that** the item of information on a future energy requirement is generated and/or stored by means of the energy management system (1).

3. Method according to Claim 1 or 2, **characterized in that** the energy management system (1) implements the energy management using fuzzy logic.

4. Method according to Claim 3, **characterized in that**, on the basis of data from the past, a load prognosis is produced as an item of information on a future energy requirement.

5. Method according to one of the preceding claims, **characterized in that** the item of information on a transport measure to be carried out is used to determine at least one future peak load, whereafter the future peak load is compared with the maximum possible peak load and, when the maximum possible peak load is exceeded:
c) the energy consumption of the transport device (3, 5) is influenced by modifying the transport measure such that the future peak load does not exceed the maximum possible peak load and/or
d) the maximum possible peak load is increased by energy being fed into the energy buffer store (13, 15).

6. Method according to one of the preceding claims, **characterized in that** the primary energy source (7, 9, 11) is temporarily switched off.

7. Method for operating a transport device (3, 5) according to one of Claims 5 to 6, **characterized in that**, on the basis of an item of information on a future energy requirement, future planned operating states of the transport device (3, 5) are changed and, in particular, a new item of information on a future energy requirement is generated.

8. Transport device having an energy management system (1), comprising a primary energy source (7, 9, 11), an energy buffer store (13, 15) and one or more electrical energy consumers (17, 19, 21), in particular at least one electrical drive (17, 19, 21, 23, 25), the transport device being adapted for implementing the method according to one of Claims 1 to 8.

9. Transport device according to Claim 8, **characterized in that** it has a means for energy recovery.

10. Transport device according to Claim 8 or 9, **characterized in that** it is a vehicle (5), the vehicle (5) in particular being an automated guided vehicle, which is provided in particular for transporting goods and/or people.

## Revendications

1. Procédé pour faire fonctionner un dispositif de transport par un système ( 1 ) de gestion d'énergie, comprenant une source ( 9,11 ) d'énergie primaire, un accumulateur ( 13,15 ) intermédiaire d'énergie et un ou plusieurs consommateurs ( 17,19,21 ) d'énergie électrique, notamment au moins un entraînement ( 17,19,21,23,25 ) électrique, dans lequel
- au moyen d'une information sur au moins une mesure de transport à effectuer, on élabore une information sur un besoin d'énergie à venir,
- on met à disposition du système ( 1 ) de gestion d'énergie l'information sur un besoin d'énergie à venir d'au moins une partie du dispositif ( 3,5 ) de transport,
- on effectue une commande et/ou une régulation en fonction de l'information sur un besoin d'énergie à venir,
- de la mise à disposition d'énergie par l'accumulateur ( 13,15 ) intermédiaire d'énergie et/ou
- de la consommation d'énergie
**caractérisé en ce que** sur la base de l'information sur un besoin d'énergie à venir, on modifie la succession de mesure de transport du dispositif ( 3,5 ) de transport, on élabore une nouvelle information sur le besoin d'énergie à venir.

2. Procédé suivant la revendication 1,
**caractérisé en ce que** l'on élabore et/ou mémorise l'information sur un besoin d'énergie à venir au moyen du système ( 1 ) de gestion d'énergie.

3. Procédé suivant la revendication 1 ou 2,
**caractérisé en ce que** le système ( 1 ) de gestion d'énergie effectue la gestion d'énergie en utilisant une logique floue.

4. Procédé suivant la revendication 3,
**caractérisé en ce que** sur la base de données du passé on élabore un pronostic de charge en tant qu'information sur un besoin d'énergie à venir.

5. Procédé suivant l'une des revendications précédentes,
**caractérisé en ce qu'**on détermine par l'information sur une mesure de transport à effectuer au moins une pointe de charge à venir, la pointe de charge à venir étant comparée à la pointe de charge maximum possible et si elle dépasse la pointe de charge maximum possible.
c) on influe, en modifiant la mesure de transport, sur la consommation d'énergie du dispositif ( 3,5 ) de transport de façon à ce que la pointe de charge à venir ne dépasse pas la pointe de charge maximum possible et/ou
d) on augmente la pointe de charge maximum possible en alimentant en énergie l'accumulateur ( 13,15 ) intermédiaire d'énergie.

6. Procédé suivant l'une des revendications précédentes,
**caractérisé en ce que** l'on met de temps en temps la source ( 7,9,11 ) d'énergie primaire hors circuit.

7. Procédé pour faire fonctionner un dispositif ( 3,5 ) de transport suivant l'une des revendications 5 à 6,
**caractérisé en ce que**, sur la base d'une information sur un besoin d'énergie à venir, on modifie des états de fonctionnement planifiés dans l'avenir du dispositif ( 3,5 ) de transport et on élabore notamment une information nouvelle sur un besoin d'énergie à venir.

8. Dispositif de transport ayant un système ( 1 ) de gestion d'énergie comprenant une source ( 7,9,11 ) d'énergie primaire, un accumulateur ( 13,15 ) intermédiaire d'énergie et un ou plusieurs consommateurs ( 17,19,21 ) d'énergie électrique, notamment au moins un entraînement ( 17,19,21,23,25 ) électrique, le dispositif de transport étant adapté pour la mise en oeuvre du procédé suivant l'une des revendications 1 à 7.

9. Dispositif de transport suivant la revendication 8,
**caractérisé en ce qu'**il a un moyen de récupération d'énergie.

10. Dispositif de transport suivant la revendication 8 ou 9,
**caractérisé en ce que** c'est un véhicule ( 5 ), le véhicule ( 5 ) étant notamment un véhicule guidé automatiquement, qui est prévu notamment pour le transport de marchandises et/ou de personnes.
